# EUROPÄISCHE PATENTSCHRIFT

(11) **EP 3 436 795 B1**
(45) Veröffentlichungstag und Bekanntmachung des Hinweises auf die Patenterteilung: **18.10.2023**
(21) Anmeldenummer: 17714173.6
(22) Anmeldetag: 27.03.2017
(51) Int. Cl.: G01N 1/28, B03C 1/28, G01N 33/20, G01N 23/20

(54) **VORRICHTUNG UND VERFAHREN ZUR AUFBEREITUNG EINES PROBEMATERIALS**
APPARATUS AND METHOD FOR PREPARING A SAMPLE MATERIAL
DISPOSITIF ET PROCÉDÉ DE PRÉPARATION D'UNE MATIÈRE À ANALYSER

(30) Priorität: 30.03.2016 DE 102016205243
(43) Veröffentlichungstag der Anmeldung: 06.02.2019
(73) Patentinhaber: FLSmidth A/S, 2500 Valby (DK)
(72) Erfinder: TEUTENBERG, Reinhard, 59423 Unna (DE)
(74) Vertreter: Eisenführ Speiser
(86) Internationale Anmeldenummer: PCT/EP2017/057173
(87) Internationale Veröffentlichungsnummer: WO 2017/167680

(56) Entgegenhaltungen:
- EP-A2- 1 052 500
- EP-B1- 2 346 612
- WO-A1-2015/150081
- DE-A1-102008 047 854
- DE-U1-202011 104 707
- US-A- 3 006 472
- US-A- 3 279 602
- US-A- 3 318 447
- US-A- 4 363 722
- US-A- 4 961 841
- US-A- 5 714 063
- US-A- 5 740 919
- Herzog Maschinenfabrik: "HP-MA / HP-PA Pulverizing Mill and Pellet Press in Modular Design", , 7. Juli 2014 (2014-07-07), XP055381616, Gefunden im Internet: URL:http://www.herzog-maschinenfabrik.de/f ileadmin/content/downloads/en/productbroch ure/HZ_PB_HP-MA_HP-PA_en.pdf [gefunden am 2017-06-14]
- Siebtechnik: "Automatic milling and pressing system AMP", , 1. Juni 2013 (2013-06-01), XP055382013, Gefunden im Internet: URL:http://www.christianberner.se/$-1/file /leverantorer/siebtechnik/dokument/automat ic-milling-and-pressing-system-amp.pdf [gefunden am 2017-06-15]
- Bruker: "Slag Analysis by X-ray Fluorescence Spectrometry", , 18. September 2009 (2009-09-18), XP055381474, Gefunden im Internet: URL:https://www.bruker.com/fileadmin/user_ upload/8-PDF-Docs/X-rayDiffraction_Element alAnalysis/XRF/Webinars/Webinar_200809_-_S lag_Analysis_by_XRF_Spectrometry.pdf [gefunden am 2017-06-14]

## Beschreibung

Die Erfindung betrifft eine Vorrichtung und ein Verfahren zur Aufbereitung eines Probematerials, insbesondere Schlacke oder Erze, aus einem Mineral- oder Stahlherstellungsprozess.

Zur Überprüfung des Stahl- oder Mineralherstellungsprozesses werden üblicherweise an verschiedensten Stellen des Prozesses Proben von beispielsweise Schlacken oder Erzen entnommen und anschließend analysiert. Das entnommene Probematerial wird zur anschließenden Analyse beispielsweise zu einer Tablette verpresst. Ein Verfahren zur Herstellung einer solchen Presstablette ist aus der DE 10 2013 106 998 A1 bekannt. Die Broschüre von Herzog Maschinenfabrik "HP-MA / HP-PA Pulverizing Mill and Pellet Press in Modular Design" zeigt eine Zerkleinerungseinrichtung mit nachgeschalteter Presseinrichtung zur Probenpresse mit einer Magneteinrichtung zur Partikelseparation gemäß der Präambel des Anspruchs 1.

Zur quantitativen Bestimmung der elementaren Zusammensetzung solcher Materialproben werden häufig Verfahren wie beispielsweise Spektralanalyse, insbesondere Röntgenfluoreszenzanalyse eingesetzt. Solche nachfolgenden Analyseverfahren werden insbesondere durch sich in dem Probematerial befindende Eisenpartikel gestört, wobei diese die Messergebnisse verfälschen. Roheisen ist ein duktiler Werkstoff, der bei der Aufbereitung des Probematerials verformt oder nicht ausreichend fein gemahlen wird und daher eine anschließende Analyse erschwert.

Es ist daher Aufgabe der vorliegenden Erfindung, eine Vorrichtung zur Aufbereitung eines Probematerials bereitzustellen, die eine Analyse der elementaren Zusammensetzung des Probematerials vereinfacht.

Diese Aufgabe wird erfindungsgemäß durch eine Vorrichtung mit den Merkmalen des unabhängigen Vorrichtungsanspruchs 1 sowie durch ein Verfahren mit den Merkmalen des unabhängigen Verfahrensanspruchs 10 gelöst. Vorteilhafte Weiterbildungen ergeben sich aus den abhängigen Ansprüchen.

Eine Vorrichtung zur Aufbereitung eines Probematerials, insbesondere Schlacke oder Erz, aus einem Mineral- oder Stahlherstellungsprozess, umfasst nach einem ersten Aspekt zumindest eine Zerkleinerungseinrichtung zur Zerkleinerung des Probematerials und zumindest eine der Zerkleinerungseinrichtung nachgeschaltete Magneteinrichtung, mittels welcher ein Magnetfeld erzeugbar ist, wobei die Magneteinrichtung derart angeordnet ist, dass in dem Probematerial enthaltene Eisenpartikel durch die Magneteinrichtung magnetisierbar sind und wobei der Zerkleinerungseinrichtung eine Leitung zum Leiten des Probematerials nachgeschaltet ist und die Magneteinrichtung an der Leitung angebracht ist.

Beispielsweise weist die Zerkleinerungseinrichtung eine Brecheinrichtung und/ oder eine Mahleinrichtung auf, wobei zumindest einer der Brecheinrichtung und/ oder der Mahleinrichtung eine Leitung mit einer Magneteinrichtung nachgeschaltet ist.

Bei dem Probematerial handelt es sich beispielsweise um Industrieschlacken, die insbesondere in einem Stahlherstellungsprozess anfallen. Das Probematerial umfasst des Weiteren beispielsweise Erze. Das Probematerial wird aus dem Herstellungsprozess entnommen und anschließend beispielsweise abgekühlt und der Zerkleinerungsvorrichtung zugeführt. Bei der Zerkleinerungsvorrichtung handelt es sich beispielswiese um eine Walzenmühle, eine Scheibenschwingmühle, eine Vertikalrollenmühle, eine Mühle, die nach dem elektromechanischen Zerkleinerungsprinzip arbeitet oder einen Brecher. Im Anschluss an die Zerkleinerungseinrichtung wird das Probematerial zu der Magneteinrichtung geleitet. Die Magneteinrichtung ist beispielsweise an einer der Zerkleinerungseinrichtung nachgeschalteten Leitung oder Presseinrichtung angeordnet.

Die Magneteinrichtung ist derart ausgebildet, dass sie ein Magnetfeld erzeugt, das sich in das Probematerial erstreckt. Vorzugsweise ist das Magnetfeld derart ausgebildet, dass es metallische Eisenpartikel mit einer Größe von >5mm, vorzugsweise >1mm, insbesondere >100µm, höchstvorzugshalber kleiner als 100µm magnetisiert und in Richtung der Magneteinrichtung bewegt. Insbesondere ist die Magneteinrichtung deaktivierbar, sodass diese kein Magnetfeld erzeugt.

Eine solche Magneteinrichtung, mittels welcher ein Magnetfeld erzeugbar ist, ermöglicht eine Reduktion des Eisenanteils in dem Probematerial im Anschluss an die Zerkleinerungseinrichtung. Dadurch wird die anschließende Analyse des Probematerials vereinfacht und zuverlässige Analyseergebnisse werden erreicht. In Abhängigkeit dieser Analyseergebnisse werden anschließend Parameter des Erz- oder Stahlherstellungsprozesses falls erforderlich entsprechend geändert.

Vorzugsweise ist die Magneteinrichtung am äußeren Umfang der Leitung angebracht. Die Leitung umfasst vorzugsweise ein Material, das für ein Magnetfeld durchlässig ist, wie beispielsweise Silikon. Insbesondere ist ausschließlich ein Teilbereich der Leitung aus einem für ein Magnetfeld durchlässigen Material ausgebildet, wobei die Magneteinrichtung an diesem Teilbereich angebracht ist. Insbesondere ist die Magneteinrichtung derart an der Leitung angebracht, dass sie einen Teilbereich der Leitung ausbildet. Die Magneteinrichtung ist dazu beispielsweise rohrförmig ausgebildet. Eine Magneteinrichtung an einer der Zerkleinerungseinrichtung nachgeschalteten Leitung ermöglicht eine Abscheidung der Eisenpartikel aus dem Probematerial unmittelbar im Anschluss an die Zerkleinerung und vor dem Eintritt des Materials in eine weitere Bearbeitungseinrichtung, wie beispielsweise eine Presseinrichtung.

Gemäß einer ersten Ausführungsform umfasst die Magneteinrichtung einen Permanentmagneten oder einen Elektromagneten. Vorzugsweise umfasst die Magneteinrichtung eine Mehrzahl von Permanentmagneten und/oder Elektromagneten, die beispielswiese ringförmig und/oder segmentförmig angeordnet sind. Ein Elektromagnet weist zumindest eine Spule mit einer Mehrzahl von Windungen auf. Die Feldstärke des Magnetfeldes ist insbesondere über die Stromstärke einstellbar. Bei einem Permanentmagneten ist die Feldstärke des Magnetfeldes an dem Probematerial beispielsweise über den Abstand der Magneteinrichtung zu dem Probematerial einstellbar.

Erfindungsgemäß ist der Zerkleinerungseinrichtung eine Presseinrichtung zum Pressen des Probematerials, insbesondere zu einer Tablette, nachgeschaltet und die Presseinrichtung weist einen Presstempel zur Aufnahme des Probematerials auf. Der Pressstempel ist in einem Gehäuse der Presseinrichtung angeordnet und relativ zu dem Gehäuse bewegbar. Das Probematerial wird vorzugsweise an einem Kopfbereich des Presstempels, der in Richtung des Einlasses in die Presseinrichtung weist, aufgenommen. Bei einer Bewegung des Pressstempels gegen eine Gegendruckplatte wird das Probematerial zu einer Tablette verpresst. Vorzugsweise ist eine weitere Magneteinrichtung zwischen einer Position außerhalb der Presseinrichtung und einer Position innerhalb der Presseinrichtung, in welcher die Magneteinrichtung mit dem Probematerial in Verbindung steht, bewegbar angebracht. Insbesondere wird die weitere Magneteinrichtung in das Probematerial eingetaucht, wobei die Eisenpartikel des Probematerials magnetisiert werden. In der Position außerhalb der Presseinrichtung wirkt die weitere Magneteinrichtung nicht derart mit dem Probematerial zusammen, dass eine Magnetisierung der Eisenpartikel erfolgt. Vorzugsweise wird die weitere Magneteinrichtung in Richtung des Kopfbereichs des Pressstempels und relativ zu diesem bewegbar angebracht.

Die Presseinrichtung weist insbesondere ein Gehäuse (Matrize) auf und der Presstempel ist innerhalb des Gehäuses zwischen einer zurückgezogenen Position und einer Pressposition bewegbar angeordnet, wobei ein Ring und eine Gegendruckplatte vorgesehen sind, die mit dem Presstempel in der Pressposition zusammenwirken, wobei die weitere Magneteinrichtung derart angeordnet ist, dass der Presstempel und/oder der Ring oder die Gegendruckplatte und/ oder der Ring, insbesondere in der Pressposition, durch die Magneteinrichtung magnetisierbar ist/sind.

Der Ring ist insbesondere aus Stahl ausgebildet und an dem Einlassbereich der Presseinrichtung angeordnet. Vorzugsweise liegt der Ring auf dem Gehäuse im Bereich des Einlasses auf. Vor dem Pressvorgang wird der Ring auf dem Gehäuse positioniert und bildet zusammen mit dem Pressstempel und der Gegendruckplatte die Pressform der Tablette. Der Ring beabstandet vorzugsweise das Gehäuse der Presseinrichtung von einer Gegendruckplatte, gegen welche sich der Pressstempel bewegt, um das Probematerial zu einer Tablette zu verpressen. Bei einem Pressvorgang wird der Pressstempel beispielsweise mittels einer hydraulischen oder mechanischen Hubvorrichtung in Richtung der Gegendruckplatte relativ zu dem Gehäuse bewegt.

Eine Magnetisierung des Pressstempels, des Rings, der Gegendruckplatte oder Kombinationen von diesen bewirkt eine Verschiebung der Eisenpartikel innerhalb des Probematerials in Richtung des magnetisierten Elements. Die Eisenpartikel werden beispielsweise durch einen magnetisierten Presstempel in Richtung des Pressstempels bewegt und lagern sich an einem Randbereich, vorzugsweise dem Pressstempel zugewandten Bereich, an. Bei dem Verpressen des Probenmaterials zu einer Presstablette verbleiben die Eisenpartikel in dem Randbereich der Tablette, insbesondere dem Pressstempel zugewandten Bereich, was eine anschließende Analyse des Probematerials erheblich vereinfacht, da die Messfläche üblicherweise mittig auf der Oberfläche der Presstablette ist und die Probe mit einer Eindringtiefe von etwa 50-100µm analysiert wird. Üblicherweise wird die von dem Pressstempel abgewandte Seite analysiert. In den Randbereichen der Presstablette abgelagertes Eisen hat daher keinen oder nur einen sehr geringen Einfluss auf das Messergebnis.

Die weitere Magneteinrichtung ist beispielsweise in dem Gehäuse oder an der Gegendruckplatte angeordnet. Eine in dem Gehäuse angeordnete Magneteinrichtung ist vorzugsweise derart angeordnet, dass sie den Pressstempel und/ oder den Ring magnetisiert. Die weitere Magneteinrichtung ist innerhalb des Gehäuses der Presseinrichtung vorzugsweise auf der Höhe des Presstempels angebracht. Eine an der Gegendruckplatte angebrachte Magneteinrichtung magnetisiert vorzugsweise die Gegendruckplatte und / oder den Ring.

Die Magneteinrichtung ist gemäß einer weiteren Ausführungsform insbesondere konzentrisch, um die Leitung herum angeordnet. Eine konzentrische Anordnung der Magneteinrichtung um die Leitung herum bewirkt eine Bewegung der Eisenpartikel in Richtung der Innenwand der Leitung, sodass diese dort gehalten werden. Dies ermöglicht eine zuverlässige Separation der Eisenpartikel aus dem Probematerial. Das Magnetfeld der Magneteinrichtung ist vorzugsweise derart ausgebildet, dass die Eisenpartikel gegen die Strömung des Probematerials an der Innenwand der Leitung gehalten und von dem Probematerial separiert werden.

Die Leitung ist gemäß einer weiteren Ausführungsform zwischen der Zerkleinerungseinrichtung und der Presseinrichtung angebracht. Insbesondere ist die Leitung zwischen der Zerkleinerungseinrichtung und einem Auffangbehälter angebracht, wobei das Probematerial im Anschluss an die Zerkleinerung nicht zu einer Tablette verpresst, sondern unverpresst analysiert wird.

Die Magneteinrichtung ist gemäß einer weiteren Ausführungsform relativ zu der Presseinrichtung und/ oder der Leitung bewegbar angebracht. Beispielsweise ist die Magneteinrichtung schwenkbar angebracht. Vorzugsweise ist die Magneteinrichtung von einer Position, in welcher Eisenpartikel durch das mittels der Magneteinrichtung erzeugte Magnetfeld magnetisierbar sind, in eine Position bewegbar, in welcher die Eisenpartikel des Probematerials nicht mittels des Magnetfeldes der Magneteinrichtung magnetisierbar sind.

Gemäß einer weiteren Ausführungsform ist eine Vibrationseinrichtung zum Vibrieren der Magneteinrichtung, der Leitung und / oder des Pressstempels vorgesehen. Eine Vibration des Pressstempels bewirkt eine Vibration des darauf gelagerten Probematerials, wodurch dieses durchmischt wird. Dadurch wird eine zuverlässige Magnetisierung der Eisenpartikel in dem Probematerial mittels der Magneteinrichtung erreicht. Eine Vibration der Magneteinrichtung und / oder der Leitung bewirkt insbesondere nach der Deaktivierung der Magneteinrichtung, ein Lösen der Eisenpartikel von der Magneteinrichtung und/ oder der Leitung, sodass diese gereinigt werden. Eine Vibration der Leitung beim Durchströmen des Probematerials ermöglicht ferner eine effizientere Trennung der Eisenpartikel aus dem Probematerial.

Erfindungsgemäß ist die Magneteinrichtung im Wesentlichen ringförmig ausgebildet. Die ringförmige Magneteinrichtung ist beispielsweise um die Leitung oder den Pressstempel der Presseinrichtung angeordnet. Vorzugsweise weist die Magneteinrichtung eine Mehrzahl von Magnetsegmenten auf, die zu einem Ring angeordnet sind. Beispielsweise umfasst die Magneteinrichtung zwei halbringförmige Segmente.

Die Magneteinrichtungen umfassen gemäß einer weiteren Ausführungsform einen Elektromagneten mit zumindest einer Spule, die eine in Strömungsrichtung des Probematerials insbesondere in der Leitung zunehmende Windungszahl aufweist. Die zunehmende Windungszahl erzeugt ein in Richtung der Strömungsrichtung des Probematerials in der Stärke ansteigendes Magnetfeld, wobei eine Separation der Eisenpartikel aus dem Probematerial zuverlässig erreicht wird. Vorzugsweise ist der Elektromagnet mit der Spule, die eine in Strömungsrichtung des Probematerials zunehmende Windungszahl aufweist, um die Leitung herum angeordnet.

Gemäß einer weiteren Ausführungsform ist die magnetische Gradientenkraft des Magnetfeldes der Magneteinrichtung einstellbar. Insbesondere ist diese über die Stromstärke an der Spule einstellbar. Eine Einstellbarkeit der Gradientenkraft ermöglicht eine Ausrichtung der Bewegung der Eisenpartikel. Zusätzlich ist es möglich, die Gradientenkraft derart einzustellen, dass lediglich Eisenpartikel unterhalb einer gewünschten Größe bewegt oder von dem Probematerial separiert werden. Der Grad der Separation ist daher genau einstellbar, beispielsweise werden lediglich die Roheisenpartikel aus dem Probematerial bewegt, wobei weitere magnetische Partikel, wie Magnetit in dem Probematerial verbleiben.

Gemäß einer weiteren Ausführungsform ist teilweise um die Magneteinrichtungen herum zumindest ein Abschirmelement zum Abschirmen der Umgebung gegen das Magnetfeld der Magneteinrichtung angeordnet. Das Abschirmelement dient insbesondere der Reduzierung der Streufelder des Magnetfeldes und sorgt für einen magnetischen Rückschluss. Das Abschirmelement weist insbesondere ein elektrisch leitfähiges Schirmmaterial auf, wie beispielsweise Blech. Vorzugsweise ist das Abschirmelement ringförmig ausgebildet und weist an den Ringbereichen einen u-förmigen Querschnitt auf, der die Magneteinrichtung zumindest teilweise umgibt. Das Abschirmelement ist zumindest teilweise um den Permanentmagneten oder den Elektromagneten herum angeordnet und verhindert eine Wechselwirkung des Magnetfeldes mit in der Umgebung der Magneteinrichtung angeordneten insbesondere ferromagnetischen Bauteilen. Insbesondere ist das Gehäuse als Abschirmelement ausgebildet und weist ein elektrisch leitfähiges Schirmmaterial auf. Das Abschirmelement weist vorzugsweise eine Schlalenform auf, wobei die Magneteinrichtung innerhalb der Schale angeordnet ist.

Gemäß einer weiteren Ausführungsform ist eine Abscheideeinrichtung zumindest teilweise innerhalb der Leitung derart angeordnet ist, dass diese von der Magneteinrichtung magnetisierbar ist. Die Abscheideeinrichtung erstreckt sich vorzugsweise durch das Innere der Leitung hindurch. Insbesondere weist die Abscheideeinrichtung eine Kreuzform auf mit zwei stab- oder balkenförmigen Elementen, die sich in dem Mittelpunkt der Leitung kreuzen. Die Abscheideeinrichtung ist aus einem Metall ausgebildet, sodass diese von der Magneteinrichtung magnetisierbar ist. Beispielsweise erstreckt sich die Abscheideeinrichtung entlang zumindest eines Teils oder der gesamten Länge der Leitung. Vorzugsweise erstreckt sich die Abscheideeinrichtung zumindest teilweise entlang der Oberfläche der Leitung, sodass eine Magnetisierung der Abscheideeinrichtung durch die Magneteinrichtung erleichtert wird.

Insbesondere ist innerhalb der Leitung, vorzugsweise mittig, ein Verdrängungskörper angeordnet. Der Verdrängungskörper ist vorzugsweise derart ausgebildet und angeordnet, dass er das Material innerhalb der Leitung in Richtung der Innenwand der Leitung leitet. Vorzugsweise ist der Verdrängungskörper aus einem nicht ferromagnetischen Material und beispielsweise rotationssymmetrisch ausgebildet. Insbesondere bei einer ringförmigen Magneteinrichtung ist im Zentrum der Leitung ein Bereich ausgebildet, der bedingt durch die Bauform der Magneteinrichtung und der Feldlinienverteilung von der Magnetkraft der Magneteinrichtung nicht erreicht werden kann. Ein innerhalb der Leitung angeordneter Verdrängungskörper bewirkt ein Leiten des Materials in einen Bereich innerhalb der Leitung, in dem Magnetfeldlinien der Magneteinrichtung verlaufen, sodass Eisenpartikel des Materials zuverlässig magnetisiert werden.

Die Leitung ist gemäß einer weiteren Ausführungsform aus einem magnetfelddurchlässigen Material ausgebildet, wobei in dem Material magnetische Partikel zumindest teilweise eingebettet sind. Bei den magnetischen Partikeln handelt es sich beispielsweise um Magnetit Partikel mit einer Größe von etwa 5 - 15µm, insbesondere 10µm. Die Partikel sind derart innerhalb des Materials der Leitung angeordnet, dass sie mittels der Magneteinrichtung magnetisierbar sind. Dadurch wird innerhalb der Leitung ein magnetisches Feld erzeugt und das durch die Magneteinrichtung erzeugte Magnetfeld verstärkt.

Die Magneteinrichtungen werden beispielsweise mittels eines Ein-Quadranten-Stromrichters oder eines Vier-Quadranten Stromrichters oder eines steuerbaren DC Netzgeräts, das beispielsweise bipolar und zur Entmagnetisierung umpolbar ist, angesteuert. Eine Entmagnetisierung des Materials erfolgt insbesondere durch das Erzeugen von magnetischen Wechselfeldern mittel der Magneteinrichtung, vorzugsweise wird das Material durch abklingende Wechselfelder entmagnetisiert.

Die Erfindung umfasst des Weiteren ein Verfahren zum Aufbereiten eines Probematerials, insbesondere Schlacke oder Erz, aus einem Mineral- oder Stahlherstellungsprozess umfassend die folgenden Schritte:
a. Zerkleinern des Probematerials in einer Zerkleinerungseinrichtung und
b. Erzeugen eines Magnetfeldes und Magnetisieren von in dem Probematerial enthaltenen Eisenpartikeln mittels einer Magneteinrichtung.

Der Zerkleinerungseinrichtung ist eine Leitung zum Leiten des Probematerials nachgeschaltet und die Magneteinrichtung ist an der Leitung angebracht, wobei das Verfahren die Schritte aufweist:
Leiten des Probematerials im Anschluss an die Zerkleinerungseinrichtung durch die Leitung und Anreichern der Eisenpartikel des Probematerials an einem Wandbereich der Leitung.

Die mit Bezug auf die Vorrichtung zum Aufbereiten eines Probematerials beschrieben Vorteile treffen in verfahrensmäßiger Entsprechung auf das Verfahren zum Aufbereiten eines Probematerials zu.

Im Anschluss an die Zerkleinerungseinrichtung wird das Probematerial vorzugsweise zu der Magneteinrichtung geleitet, wobei die Eisenpartikel des Probematerials magnetisiert werden.

Erfindungsgemäß wird das Probematerial nach dem Schritt a. einer Presseinrichtung zum Pressen des Probematerials, insbesondere zu einer Tablette, zugeführt, wobei das Probematerial an einem Presstempel der Presseinrichtung aufgenommen wird. Gemäß einer Ausführungsform wie eine weitere Magneteinrichtung wird beispielsweise vor dem Schritt b. von einer Position außerhalb der Presseinrichtung in eine Position innerhalb der Presseinrichtung bewegt.

Insbesondere magnetisiert die weitere Magneteinrichtung den Presstempel der Presseinrichtung und die Eisenpartikel des Probematerials lagern sich in dem dem Pressstempel zugewandten Bereich des Probematerials an. Vorzugsweise sind ein Ring und eine Gegendruckplatte angeordnet, wobei die weitere Magneteinrichtung den Pressstempel und / oder den Ring oder die Gegendruckplatte und / oder den Ring magnetisiert.

Gemäß einer weiteren Ausführungsform werden die Eisenpartikel aus dem Probematerial entfernt.

Gemäß einer weiteren Ausführungsform werden die Leitung, die Magneteinrichtung und/ oder die Presseinrichtung und insbesondere das Probenmaterial vibriert.

Gemäß einer weiteren Ausführungsform wird die Magneteinrichtung im Anschluss an die Anreicherung des Probematerials an einem Wandbereich der Leitung deaktiviert, sodass diese kein Magnetfeld erzeugt. Die Deaktivierung der Magneteinrichtung bewirkt eine Entmagnetisierung der Eisenpartikel, sodass diese beispielsweise schwerkraftbedingt durch die Leitung bewegt werden. Im Anschluss an die Deaktivierung der Magneteinrichtung werden die Eisenpartikel vorzugsweise von der Innenwand der Leitung entfernt, beispielsweise abgesaugt oder durch eine Vibrationseinrichtung abgeschüttelt, sodass die Leitung von den Eisenpartikeln gereinigt wird. Dadurch wird ein Verstopfen der Leitung durch angelagerte Eisenpartikel verhindert.

### Beschreibung der Zeichnungen

Die Erfindung ist nachfolgend anhand mehrerer Ausführungsbeispiele mit Bezug auf die beiliegenden Figuren näher erläutert.
Fig. 1 zeigt eine schematische Darstellung einer Vorrichtung zur Aufbereitung eines Probematerials gemäß einem Ausführungsbeispiel.
Fig. 2 zeigt eine schematische Darstellung einer Leitung mit einer Magneteinrichtung in einer Schnittansicht gemäß einem weiteren Ausführungsbeispiel.
Fig. 3 zeigt eine schematische Darstellung einer Presseinrichtung mit einer Magneteinrichtung in einer Schnittansicht gemäß einem weiteren Ausführungsbeispiel.
Fig. 4 zeigt eine schematische Darstellung einer Presseinrichtung mit einer Magneteinrichtung in einer Schnittansicht gemäß einem weiteren Ausführungsbeispiel.
Fig. 5 zeigt eine schematische Darstellung einer Leitung in einer Schnittansicht gemäß einem weiteren Ausführungsbeispiel.

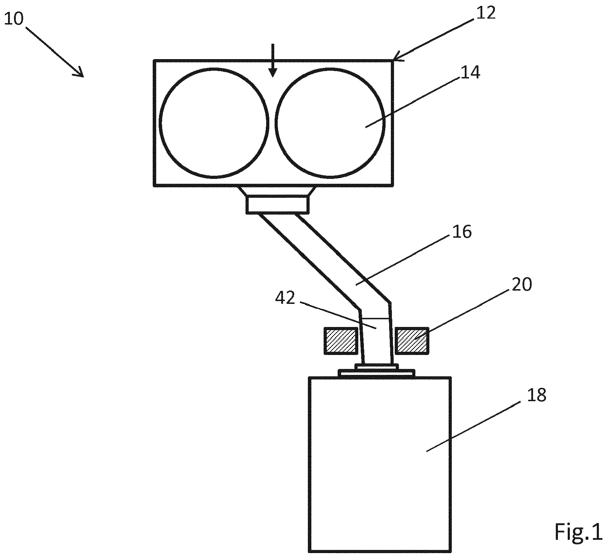

Fig. 1 zeigt eine Vorrichtung 10 zur Aufbereitung eines Probematerials. Bei dem Probematerial handelt es sich beispielsweise um Erze oder Schlacke, die aus einem Mineral- oder Stahlherstellungsprozess entnommen wurden. Die Vorrichtung 10 umfasst eine Zerkleinerungseinrichtung 12 zum Zerkleinern des Probematerials. Die Zerkleinerungseinrichtung 12 ist in dem in Fig. 1 dargestellten Ausführungsbeispiel eine Walzenmühle mit zwei gegenläufig rotierenden Mahlwalzen 14, die einen Mahlspalt zum Mahlen des Probematerials ausbilden. Bei der Zerkleinerungseinrichtung 12 kann es sich auch um eine Brecheinrichtung mit einer der Brecheinrichtung nachgeschalteten Mahleinrichtung handeln. Die Brecheinrichtung und die Mahleinrichtung sind beispielsweise mit einer Leitung zum Leiten des Probematerials miteinander verbunden.

An die Zerkleinerungseinrichtung 12 schließt sich unterhalb des Mahlspaltes eine Leitung 16 an, die das gemahlene Probematerial zu einer Presseinrichtung 18 leitet. Die Leitung 16 ist beispielsweise rohrförmig ausgebildet und umfasst zumindest einen Teilabschnitt aus einem magnetfelddurchlässigen Material wie beispielsweise Silikon PVC, Keramik oder Aluminium. Es ist ebenfalls denkbar, dass die Leitung 16 zumindest einen Teilabschnitt umfasst, der aus einem Silikon mit einer Mehrzahl von ferromagnetischen Partikeln ausgebildet ist. Die Partikel weisen beispielsweise Magnetit mit einer Größe von etwa 5 - 15µm, insbesondere 10µm auf und sind zumindest teilweise in das Material der Leitung eingebettet. Die Partikel in der Leitung sind magnetisierbar, sodass innerhalb der Leitung ein Magnetfeld erzeugt wird.

Die Leitung 16 weist beispielhaft einen im Wesentlichen vertikal verlaufenden unteren Teilbereich 42 auf, der einen Einlass zu der Presseinrichtung 18 ausbildet. Der Teilbereich 42 ist zumindest teilweise von einer Magneteinrichtung 20 umgeben. Die Magneteinrichtung 20 ist in dem Ausführungsbeispiel der Fig. 1 ringförmig ausgebildet und um die Leitung 16 herum angeordnet. Beispielsweise umfasst die Magneteinrichtungen 20 einen Permanentmagneten, der relativ zu der Leitung 16 bewegbar angebracht ist, oder einen Elektromagneten, der ein- und ausschaltbar ist und dessen Magnetfeldstärke einstellbar ist. Mittels der Magneteinrichtung 20 ist ein Magnetfeld erzeugbar, das sich innerhalb der Leitung 16 erstreckt und mit den in dem Probematerial vorhandenen Eisenpartikeln zusammenwirkt, sodass diese magnetisiert werden.

Im Betrieb der Vorrichtung 10 zur Aufbereitung eines Probematerials wird aus einem Mineral- oder Stahlherstellungsprozess entnommenes Probematerial in Pfeilrichtung der Fig. 1 in die Zerkleinerungseinrichtung 12 aufgegeben und in dieser zerkleinert. Insbesondere wird das Probematerial nicht kontinuierlich dem Mineral- oder Stahlherstellungsprozess entnommen, sondern batchweise der Zerkleinerungseinrichtung 12 in einer Menge von etwa 1 - 5 kg, vorzugsweise 200- 500g, insbesondere 25-30g zugeführt. Im Anschluss an die Zerkleinerungseinrichtung 12 wird das Probematerial vorzugweise schwerkraftbedingt durch die Leitung 16 von der Zerkleinerungseinrichtung 12 zu der Presseinrichtung 18 geleitet. In dem im Wesentlichen vertikal verlaufenden Teilabschnitt 42 der Leitung werden die Eisenpartikel des Probematerials mittels der Magneteinrichtung 20 magnetisiert und bewegen sich in Richtung der Magneteinrichtung 20 radial nach außen zu der Innenwand der Leitung 16. Das mittels der Magneteinrichtung 20 erzeugte Magnetfeld ist vorzugsweise derart ausgebildet, dass die Eisenpartikel des Probematerials an der Innenwand der Leitung 16 gegen die Strömung des Probematerials gehalten werden. Das restliche, keinen oder nur einen geringen Anteil an Eisen enthaltende Probematerial wird zu der Presseinrichtung 18 geleitet und dort beispielswiese zu einer Tablette verpresst. Es ist ebenfalls denkbar, das restliche, keinen oder nur einen geringen Anteil an Eisen enthaltende Probematerial, nicht wie in Fig. 1 dargestellt, in eine Presseinrichtung, sondern beispielsweise in einen Auffangbehälter zum Analysieren des unverpressten Probematerials zu leiten. Im Anschluss an das Strömen des Probematerials durch die Leitung 16 wird die Magneteinrichtung 20 deaktiviert, sodass kein Magnetfeld erzeugt wird. Die Eisenpartikel werden entmagnetisiert und fallen beispielsweise schwerkraftbedingt durch die Leitung 16. Es ist ebenfalls denkbar, nach der Deaktivierung der Magneteinrichtung die an der Innenwand der Leitung 16 anhaftenden Eisenpartikel abzusaugen oder abzuschütteln, sodass die Leitung 16 von den Eisenpartikeln gereinigt und eine Verstopfung der Leitung verhindert wird.

Unter der Deaktivierung der Magneteinrichtung ist beispielsweise zu verstehen, dass bei einer einen Elektromagneten umfassenden Magneteinrichtung 20 der Elektromagnet ausgeschaltet wird, sodass kein Magnetfeld erzeugt wird. Bei einer einen Permanentmagneten umfassenden Magneteinrichtung 20 wird unter der Deaktivierung verstanden, dass der Permanentmagnet von der Leitung 16 wegbewegt wird, sodass das Magnetfeld des Permanentmagneten nicht mit dem Inneren der Leitung und den an der Innenwand der Leitung anhaftenden Eisenpartikel zusammenwirkt.

Das von der Magneteinrichtung 20 erzeugte Magnetfeld ist insbesondere derart ausgebildet, dass es metallische Eisenpartikel mit einer Größe von >5mm, vorzugsweise >1mm, insbesondere >100µm magnetisiert und entgegen der Strömung des Probematerials an der Innenwand der Leitung 16 hält. Es ist ebenfalls denkbar, ein Magnetfeld zu erzeugen, durch welches auch sehr kleine Eisenpartikel, insbesondere Partikel kleiner als 100µm magnetisierbar sind.

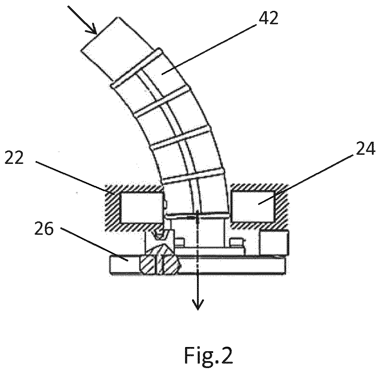

Fig. 2 zeigt einen Teilabschnitt 42 der Leitung 16 mit einer Magneteinrichtung 20. Der Teilabschnitt 42 umfasst den auslassseitigen Abschnitt der Leitung 16, an den sich beispielsweise die Presseinrichtung 18 oder ein Auffangbehälter anschließt. Die Magneteinrichtung 20 ist um einen im Wesentlichen vertikal verlaufenden Bereich des Teilabschnitts 42 angeordnet und ringförmig ausgebildet. Die Magneteinrichtung 20 umfasst in Fig. 2 beispielhaft einen Elektromagneten 24, der eine Mehrzahl von nicht dargestellten Spulen aufweist. Des Weiteren ist teilweise um die Magneteinrichtung 20 herum ein Abschirmelement 22 angeordnet, das ein elektrisch leitfähiges Schirmmaterial aufweist, wie beispielsweise Blech, oder FE-Co Legierung (VACOFLUX) für die DC Anwendung.

Das Abschirmelement 22 ist um die Bereiche des Elektromagneten 24 angeordnet, die von der Leitung 16 wegweisen und ist in dem Ausführungsbeispiel der Fig. 1 ringförmig ausgebildet, wobei es in dem Ringbereich einen u-förmigen Querschnitt aufweist. Dadurch wird sichergestellt, dass sich das Magnetfeld lediglich in die Leitung 16 erstreckt und eine magnetische Wechselwirkung mit sich in der Nähe der Leitung befindenden ferromagnetischen Bauteilen wird vermieden.

Der Elektromagnet 24 weist zumindest eine oder eine Mehrzahl von Spulen auf, deren Windungszahl in Strömungsrichtung des Probematerials zunimmt, sodass die Magnetfeldstärke, insbesondere der Gradient in der magnetischen Flussdichteverteilung radial nach außen und in Strömungsrichtung des Probematerials, insbesondere entgegen der Schwerkraft, zunimmt. Die Magnetfeldstärke und der Gradient in der magnetischen Flussdichteverteilung sind bei dem Elektromagneten einstellbar, sodass Eisenpartikel je nach gewünschter Größe aus dem Probematerial entfernbar sind. Es ist ebenfalls denkbar, um die Leitung 16 herum einen Permanentmagneten anzuordnen.

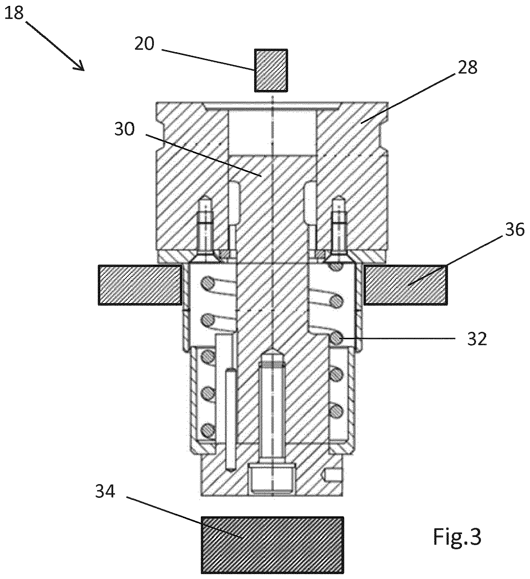

Fig. 3 zeigt eine Presseinrichtung 18 mit einer weiteren Magneteinrichtung 20, die beispielsweise im Anschluss an die in Fig. 2 dargestellte Leitung 16 angeordnet ist. Die Presseinrichtung 18 weist ein Gehäuse 28 auf, in dem ein Pressstempel 30 bewegbar angebracht ist. Der Pressstempel 30 ist in Längsrichtung des Gehäuses 28 entlang der Gehäuseinnenwand verschiebbar angebracht. An dem Einlass der Presseinrichtung 18 zugewandten Kopfbereich des Presstempels 30 ist eine Aufnahmebereich für ein Probematerial ausgebildet.

Das Gehäuse 28 der Presseinrichtung 18 ist an einer Aufnahme 36 befestigt. Der Pressstempel 30 ist an dem, dem Einlass der Presseinrichtung 18 abgewandten Ende, mit einer Feder 32 verbunden, die den Presstempel 30 in die in Fig. 3 dargestellte zurückgezogene Stellung beaufschlagt. Der Presstempel 30 ist zwischen der zurückgezogenen Position und einer Pressposition bewegbar. In der Pressposition ist der Pressstempel 30 in Längsrichtung des Gehäuses 28 und relativ zu dem Gehäuse 28 nach oben verschoben und schließt beispielsweise mit dem Einlassbereich der Presseinrichtung 18 ab. Unterhalb der Presseinrichtung 18 ist schematisch eine Hubeinrichtung 34 dargestellt, die von unten gegen den Presstempel 30 entgegen der Kraft der Feder 32 drückt und den Presstempel 30 von der zurückgezogenen Position in die Pressposition bewegt.

Oberhalb des Presstempels 30 ist schematisch eine Magneteinrichtung 20 dargestellt. Die Magneteinrichtung 20 umfasst beispielsweise einen Elektromagneten oder einen Permanentmagneten und ist relativ zu dem Gehäuse 28 und dem Presstempel 30 bewegbar angeordnet.

Zum Pressen eines Probematerials zu einer Presstablette wird das Probematerial in den Aufnahmebereich auf den Presstempel 30 geleitet. Im Anschluss daran wird die Magneteinrichtung 20 in das Gehäuse 28 der Presseinrichtung 18 zu dem Probematerial bewegt, sodass das von der Magneteinrichtung 20 erzeugte Magnetfeld mit dem Probematerial zusammenwirkt und die Eisenpartikel innerhalb des Probematerials magnetisiert werden. Die Eisenpartikel werden von der Magneteinrichtung 20 angezogen und bleiben an dieser haften. Das von der Magneteinrichtung 20 erzeugte Magnetfeld ist insbesondere derart ausgebildet, dass es metallische Eisenpartikel mit einer Größe von >5mm, vorzugsweise >1mm, insbesondere >100µm (auch <100µm) magnetisiert und diese an der Magneteinrichtung anhaften. Anschließend wird die Magneteinrichtung 20 mit den an dieser anhaftenden Eisenpartikel von der Presseinrichtung 18 weg bewegt. Das restliche Probematerial, das keinen oder einen geringen Eisenanteil enthält, wird anschließend zu einer Presstablette verpresst.

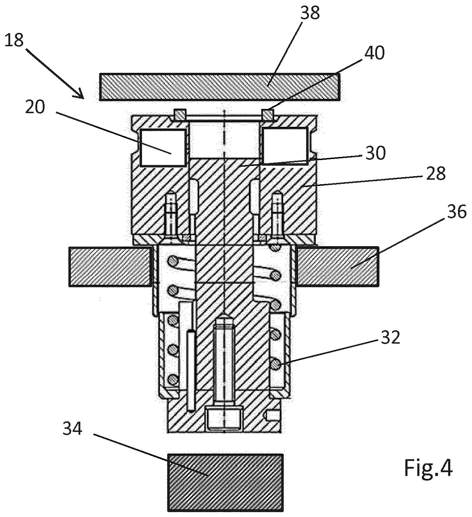

Fig. 4 zeigt eine Presseinrichtung 18, die der Presseinrichtung 18 der Fig. 3 entspricht, mit dem Unterschied, dass in dem Gehäuse 28 der Presseinrichtung 18 die Magneteinrichtung 20 angeordnet ist. Zusätzlich ist ein Ring 40 vorgesehen, der um den Einlassbereich der Presseinrichtung angeordnet ist. Oberhalb der Presseinrichtung 18 ist eine schematisch dargestellte Gegendruckplatte 38 angeordnet. Die Magneteinrichtung 20 weist beispielsweise einen Permanentmagneten oder einen Elektromagneten auf. Insbesondere ist zumindest teilweise um die Magneteinrichtung 20 herum ein nicht dargestelltes Abschirmelement angeordnet, das im Wesentlichen dem Abschirmelement 22 der Fig. 2 entspricht.

Die Magneteinrichtung 20 ist ringförmig ausgebildet und in der zurückgezogenen Position des Pressstempels 30 um den Aufnahmebereich an dem Kopf des Presstempels angeordnet. In der Pressposition des Pressstempels 30 ist die Magneteinrichtung derart angeordnet, dass der Kopf des Presstempels 30, insbesondere der Bereich, auf dem das Probematerial aufgenommen wird, magnetisiert wird, sodass die sich in dem Probematerial befindenden Eisenpartikel in Richtung des Presstempels 30 bewegt werden und sich in dem unteren dem Pressstempel 30 zugewandten Bereich des Probematerials anlagern. Das von der Magneteinrichtung 20 erzeugte Magnetfeld ist insbesondere derart ausgebildet, dass es metallische Eisenpartikel mit einer Größe von >5mm, vorzugsweise >1mm, insbesondere >100µm (auch <100µm) magnetisiert und sich diese an dem unteren dem Presstempel 30 zugewandten Randbereich des Probematerials ablagern. Die Stärke des Magnetfeldes der Magneteinrichtung 20 ist vorzugsweise einstellbar. Das Probematerial wird im Anschluss an die Verschiebung der Eisenpartikel innerhalb des Probematerials zu einer Tablette verpresst. Dabei wird der Pressstempel in Richtung der Gegendruckplatte 38 bewegt, sodass das Probematerial zwischen dem Aufnahmebereich an dem Kopf des Presstempels 30, dem Ring 40 und der Gegendruckplatte 38 verpresst wird.

Es ist ebenfalls denkbar, die Magneteinrichtung 20 derart anzuordnen, dass diese die Gegendruckplatte 38, insbesondere im Bereich der Kontaktfläche des Stahlringes, und/ oder den Ring 40 magnetisiert. Auch können lediglich Teilbereiche der Gegendruckplatte, beispielsweise ringförmige Teilbereiche, magnetisiert werden. Die Eisenpartikel des Probematerials werden in Richtung der magnetisierten Gegendruckplatte 38 und/ oder in Richtung des magnetisierten Rings 40 verschoben, sodass sich diese in den Randbereichen des Probematerials ablagern. Die verpresste Tablette weist somit lediglich in den Randbereichen der Tablette oben, unten oder ringförmig an den Seitenbereichen der Tablette Eisenpartikel auf. Diese beeinflussen an diesen Positionen die folgenden Analyseverfahren, die mit der Presstablette durchgeführt werden, nicht.

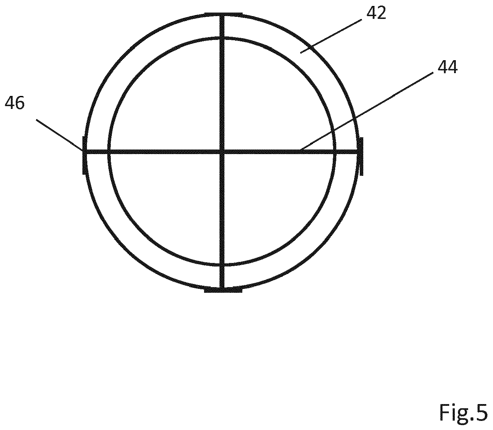

Fig. 5 zeigt eine Schnittansicht einer Leitung 16, insbesondere des Teilbereichs 42 der Leitung 16. In der Leitung ist eine Abscheideeinrichtung 44 angeordnet, die beispielhaft die Gestalt eines Kreuzes aufweist. Die Abscheideeinrichtung 44 weist zwei stabförmige oder balkenförmige Elemente auf, die jeweils durch den gesamten Durchmesser der Leitung 16 verlaufen und sich in dem Mittelpunkt der Leitung 16 kreuzen. Die Abscheideeinrichtung 44 erstreckt sich durch die insbesondere aus Silikon bestehende Leitung 16 hindurch und weist auf der Oberfläche der Leitung 16 beispielhaft vier Befestigungselemente 46 auf. Die Befestigungselemente 46 dienen zum Einen der Befestigung der Abscheideeinrichtung 44 und zum Anderen der Verbindung der Abscheideeinrichtung 44 mit der in Fig. 5 nicht dargestellten Magneteinrichtung 20. Jedes der stabförmigen oder balkenförmigen Elemente ist mit jeweils einem Befestigungselement 46 verbunden. Vorzugsweise ist die Abscheideeinrichtung aus einem Metall ausgebildet. Es ist ebenfalls denkbar, die Abscheideeinrichtung 44 ohne Befestigungselemente oder mit einer geringeren Anzahl von Befestigungselementen 46 auszuführen, wobei die Abscheideeinrichtung 44 in die insbesondere aus Silikon bestehende Leitung 16 eingegossen ist.

Die Abscheideeinrichtung 44 wird durch die Magneteinrichtung 20 magnetisiert, sodass Roheisenpartikel zusätzlich zu der Anlagerung an der Innenwand der Leitung 16, an der Abscheideeinrichtung 44 angelagert werden. Dadurch wird der Abscheidegrad von Eisenpartikeln erheblich erhöht. Im Anschluss an das Anlagern der Eisenpartikel an die Abscheideeinrichtung 44 wird diese entmagnetisiert, sodass die Eisenpartikel aus der Leitung 16 entfernt werden können.

### Bezugszeichenliste

- 10: Vorrichtung zur Aufbereitung eines Probematerials
- 12: Zerkleinerungseinrichtung
- 14: Mahlwalzen
- 16: Leitung
- 18: Presseinrichtung
- 20: Magneteinrichtung
- 22: Abschirmelement
- 24: Elektromagnet
- 26: Aufnahmeplatte
- 28: Gehäuse
- 30: Presstempel
- 32: Feder
- 34: Hubeinrichtung
- 36: Aufnahme
- 38: Gegendruckplatte
- 40: Ring
- 42: Teilbereich der Leitung
- 44: Abscheideeinrichtung
- 46: Befestigungselemente

## Patentansprüche

1. Vorrichtung (10) zur Aufbereitung eines Probematerials, insbesondere Schlacke oder Erz, aus einem Mineral - oder Stahlherstellungsprozess, aufweisend zumindest eine Zerkleinerungseinrichtung (12) zur Zerkleinerung des Probematerials,
wobei zumindest eine der Zerkleinerungseinrichtung (12) nachgeschaltete Magneteinrichtung (20) vorgesehen ist, mittels welcher ein Magnetfeld erzeugbar ist, wobei die Magneteinrichtung (20) derart angeordnet ist, dass in dem Probematerial enthaltene Eisenpartikel durch die Magneteinrichtung (20) magnetisierbar sind und wobei der Zerkleinerungseinrichtung (12) eine Leitung (16) zum Leiten des Probematerials nachgeschaltet ist, wobei der Zerkleinerungseinrichtung (12) eine Presseinrichtung (18) zum Pressen des Probematerials, insbesondere zu einer Tablette, nachgeschaltet ist und die Presseinrichtung (18) einen Pressstempel (30) zur Aufnahme des Probematerials aufweist,
**dadurch gekennzeichnet,**
**dass** die Magneteinruchtung (20) an der Leitung (16) angebracht ist, wobei die ringförmige Magneteinrichtung (20) um die Leitung (16) herum angeordnet ist und derart ausgebildet ist, dass die Eisenpartikel an der Innenwand der Leitung (16) gehalten werden.

2. Vorrichtung (10) nach Anspruch 1, wobei die Magneteinrichtung (20) einen Permanentmagneten oder einen Elektromagneten (24) umfasst.

3. Vorrichtung (10) nach einem der vorangehenden Ansprüche, wobei die Magneteinrichtung (20) relativ zu der Leitung (16) bewegbar angebracht ist.

4. Vorrichtung (10) nach einem der vorangehenden Ansprüche, wobei eine Vibrationseinrichtung zum Vibrieren der Magneteinrichtung (20) und/ oder der Leitung (16) vorgesehen ist.

5. Vorrichtung (10) nach einem der vorangehenden Ansprüche, wobei die Magneteinrichtung (20) einen Elektromagneten mit zumindest einer Spule umfasst, die eine in Strömungsrichtung des Probematerials zunehmende Windungszahl aufweist.

6. Vorrichtung (10) nach einem der vorangehenden Ansprüche, wobei die magnetische Gradientenkraft des Magnetfeldes der Magneteinrichtung (20) einstellbar ist.

7. Vorrichtung (10) nach einem der vorangehenden Ansprüche, wobei teilweise um die Magneteinrichtung (20) herum zumindest ein Abschirmelement (22) zum Abschirmen der Umgebung gegen das Magnetfeld der Magneteinrichtung (20) angeordnet ist.

8. Vorrichtung (10) nach einem der vorangehenden Ansprüche, wobei eine Abscheideeinrichtung (44) zumindest teilweise innerhalb der Leitung (16) derart angeordnet ist, dass diese von der Magneteinrichtung (20) magnetisierbar ist.

9. Vorrichtung (10) nach einem der vorangehenden Ansprüche, wobei die Leitung (16) aus einem magnetfelddurchlässigen Material ausgebildet ist und in dem Material magnetische Partikel zumindest teilweise eingebettet sind.

10. Verfahren zum Aufbereiten eines Probematerials, insbesondere Schlacke oder Erz, aus einem Mineral- oder Stahlherstellungsprozess umfassend die folgenden Schritte:
a. Zerkleinern des Probematerials in einer Zerkleinerungseinrichtung (12) und
b. Erzeugen eines Magnetfeldes und Magnetisieren von in dem Probematerial enthaltenen Eisenpartikeln mittels einer ringförmigen Magneteinrichtung (20) wobei der Zerkleinerungseinrichtung (12) eine Leitung (16) zum Leiten des Probematerials nachgeschaltet ist und die Magneteinrichtung (20) an der Leitung (16) um die Leitung (16) herum angebracht ist und wobei das Verfahren die Schritte aufweist: Leiten des Probematerials im Anschluss an die Zerkleinerungseinrichtung (12) durch die Leitung und Anlagern der Eisenpartikel des Probematerials an einem Wandbereich der Leitung (16), wobei das Probematerial nach dem Schritt a. einer Presseinrichtung (18) zum Pressen des Probematerials, insbesondere zu einer Tablette, zugeführt wird und wobei das Probematerial an einem Pressstempel (30) der Presseinrichtung (18) aufgenommen wird.

11. Verfahren nach Anspruch 10, wobei die Magneteinrichtung (20) im Anschluss an die Anlagerung des Probematerials an dem Wandbereich der Leitung (16) deaktiviert wird, sodass diese kein Magnetfeld erzeugt.

12. Verfahren nach einem der Ansprüche 10 oder 11, wobei die Magneteinrichtung (20), die Presseinrichtung (18) und / oder die Leitung (16) und insbesondere das Probenmaterial vibriert werden.

13. Verfahren nach wenigstens einem der vorherigen Ansprüche 10 bis 12, wobei die Eisenpartikel aus dem Probematerial wenigstens teilweise entfernt werden.

## Claims

1. Apparatus (10) for preparing a sample material, in particular slag or ore from a mineral or steel production process, the apparatus having at least one comminution device (12) for comminuting the sample material,
wherein downstream of the comminution device (12), at least one magnet device (20) is provided by means of which a magnetic field can be generated, wherein the magnet device (20) is arranged such that iron particles contained in the sample material can be magnetised by the magnet device (20) and wherein a conduit (16) for conducting the sample material is connected downstream of the comminution device (12),
wherein a pressing device (18) for pressing the sample material, in particular into a tablet, is connected downstream of the comminution device (12) and the pressing device (18) has a press ram (30) for receiving the sample material,
**characterised in that**
the magnet device (20) is attached to the conduit (16), wherein the annular magnet device (20) is arranged around the conduit (16) and is configured such that the iron particles are held against the inner wall of the conduit (16).

2. Apparatus (10) according to claim 1, wherein the magnet device (20) comprises a permanent magnet or an electromagnet (24).

3. Apparatus (10) according to any one of the preceding claims, wherein the magnet device (20) is attached so as to be movable relative to the conduit (16).

4. Apparatus (10) according to any one of the preceding claims, wherein a vibration device is provided for vibrating the magnet device (20) and/or the conduit (16).

5. Apparatus (10) according to any one of the preceding claims, wherein the magnet device (20) comprises an electromagnet with at least one coil having a number of turns that increases in the flow direction of the sample material.

6. Apparatus (10) according to any one of the preceding claims, wherein the magnetic gradient force of the magnetic field of the magnet device (20) is adjustable.

7. Apparatus (10) according to any one of the preceding claims, wherein at least one shielding element (22) for shielding the environment from the magnetic field of the magnet device (20) is arranged partially around the magnet device (20).

8. Apparatus (10) according to any one of the preceding claims, wherein a separating device (44) is arranged at least partially within the conduit (16) such that it can be magnetised by the magnet device (20).

9. Apparatus (10) according to any one of the preceding claims, wherein the conduit (16) is formed of a magnetic field-permeable material and magnetic particles are at least partially embedded in the material.

10. Method for preparing a sample material, in particular slag or ore, from a mineral or steel production process comprising the following steps:
a. comminuting the sample material in a comminution device (12) and
b. generating a magnetic field and magnetising iron particles contained in the sample material by means of an annular magnet device (20),
wherein a conduit (16) for conducting the sample material is connected downstream of the comminution device (12) and the magnet device (20) is attached to the conduit (16) around the conduit (16), and wherein the method has the steps of: conducting the sample material downstream of the comminution device (12) through the conduit and depositing the iron particles of the sample material on a wall region of the conduit (16), wherein the sample material, after step a., is fed to a pressing device (18) for pressing the sample material, in particular into a tablet, and wherein the sample material is received on a press ram (30) of the pressing device (18).

11. Method according to claim 10, wherein the magnet device (20) is deactivated following the deposition of the sample material on the wall region of the conduit (16), such that the latter does not generate a magnetic field.

12. Method according to any one of claims 10 or 11, wherein the magnet device (20), the pressing device (18) and/or the conduit (16) and in particular the sample material are vibrated.

13. Method according to at least one of the preceding claims 10 to 12, wherein the iron particles are at least partially removed from the sample material.

## Revendications

1. Dispositif (10) pour la préparation d'une matière à analyser, en particulier de scories ou minerai, provenant d'un processus de production minière ou d'aciérie, présentant au moins un dispositif de broyage (12) pour le broyage de la matière à analyser,
dans lequel au moins un dispositif magnétique (20) monté en aval du dispositif de broyage (12) est prévu, au moyen duquel un champ magnétique peut être généré, dans lequel le dispositif magnétique (20) est agencé de telle manière que des particules de fer contenues dans la matière à analyser soient magnétisables par le dispositif magnétique (20) et dans lequel une conduite (16) pour conduire la matière à analyser est montée en aval du dispositif de broyage (12),
dans lequel un dispositif de pressage (18) pour le pressage de la matière à analyser, en particulier en une tablette, est monté en aval du dispositif de broyage (12) et le dispositif de pressage (18) présente un poinçon (30) pour la réception de la matière à analyser,
**caractérisé en ce que**
le dispositif magnétique (20) est monté au niveau de la conduite (16), dans lequel le dispositif magnétique (20) annulaire est agencé autour de la conduite (16) et est réalisé de telle manière que les particules de fer soient maintenues contre la paroi intérieure de la conduite (16).

2. Dispositif (10) selon la revendication 1, dans lequel le dispositif magnétique (20) comprend un aimant permanent ou un électroaimant (24).

3. Dispositif (10) selon l'une des revendications précédentes, dans lequel le dispositif magnétique (20) est monté de manière mobile par rapport à la conduite (16).

4. Dispositif (10) selon l'une des revendications précédentes, dans lequel un dispositif de vibration est prévu pour la vibration du dispositif magnétique (20) et/ou de la conduite (16).

5. Dispositif (10) selon l'une des revendications précédentes, dans lequel le dispositif magnétique (20) comprend un électroaimant avec au moins une bobine qui présente un nombre de spires croissant dans le sens d'écoulement de la matière à analyser.

6. Dispositif (10) selon l'une des revendications précédentes, dans lequel la force de gradient magnétique du champ magnétique du dispositif magnétique (20) est réglable.

7. Dispositif (10) selon l'une des revendications précédentes, dans lequel au moins un élément de blindage (22) pour le blindage de l'environnement contre le champ magnétique du dispositif magnétique (20) est agencé partiellement autour du dispositif magnétique.

8. Dispositif (10) selon l'une des revendications précédentes, dans lequel un dispositif de séparation (44) est agencé au moins partiellement à l'intérieur de la conduite (16) de telle manière que celui-ci soit magnétisable par le dispositif magnétique (20).

9. Dispositif (10) selon l'une des revendications précédentes, dans lequel la conduite (16) est réalisée en une matière perméable au champ magnétique et des particules magnétiques sont intégrées au moins partiellement dans la matière.

10. Procédé de préparation d'une matière à analyser, en particulier de scories ou minerai provenant d'un processus de production minière ou d'aciérie comprenant les étapes suivantes :
a. le broyage de la matière à analyser dans un dispositif de broyage (12) et
b. la génération d'un champ magnétique et la magnétisation de particules de fer contenues dans la matière à analyser au moyen d'un dispositif magnétique (20) annulaire,
dans lequel une conduite (16) est montée en aval du dispositif de broyage (12) pour conduire la matière à analyser et le dispositif magnétique (20) est monté au niveau de la conduite (16) autour de la conduite (16) et dans lequel le procédé présente les étapes consistant à : conduire la matière à analyser en aval du dispositif de broyage (12 à travers la conduite et agglomérer les particules de fer de la matière à analyser sur une zone de paroi de la conduite (16), dans lequel la matière à analyser est amené après l'étape a. dans un dispositif de pressage (18) pour le pressage de la matière à analyser, en particulier en une tablette, et dans lequel la matière à analyser est reçu au niveau d'un poinçon (30) du dispositif de pressage (18).

11. Procédé selon la revendication 10, dans lequel le dispositif magnétique (20) est désactivé à la suite de l'agglomération de la matière à analyser sur la zone de paroi de la conduite (16) de sorte que celui-ci ne génère aucun champ magnétique.

12. Procédé selon l'une des revendications 10 ou 11, dans lequel le dispositif magnétique (20), le dispositif de pressage (18) et/ou la conduite (16) et en particulier la matière à analyser sont vibrés.

13. Procédé selon au moins l'une des revendications précédentes 10 à 12, dans lequel les particules de fer sont retirées au moins partiellement de la matière à analyser.
